# EUROPEAN PATENT APPLICATION

(11) **EP 4 309 871 A1**
(43) Date of publication of application: **24.01.2024**
(21) Application number: 21931487.9
(22) Date of filing: 16.03.2021
(51) Int. Cl.: B29C 48/25, B29C 48/31

(54) **LIP SPACING ADJUSTMENT DEVICE, EXTRUSION-MOLDING DIE, EXTRUSION -MOLDING DEVICE, LIP SPACING ADJUSTMENT METHOD, AND FILM MANUFACTURING METHOD**

(71) Applicant: The Japan Steel Works, Ltd., Tokyo 141-0032 (JP)
(72) Inventor: YOKOMIZO, Kazuya, Tokyo 141-0032 (JP); SUGA, Yuji, Tokyo 141-0032 (JP); TAKAHASHI, Masaki, Tokyo 141-0032 (JP); TOMIYAMA, Hideki, Tokyo 141-0032 (JP)
(74) Representative: Simmons & Simmons LLP (Munich)
(86) International application number: PCT/JP2021/010695
(87) International publication number: WO 2022/195735

(57) **Abstract**

Provided is a lip spacing adjustment device capable of shortening the time required for adjusting lip spacing. In a lip spacing adjustment device (30) according to one embodiment, a plurality of lip spacing adjustment mechanisms (31) that are disposed in the width direction of an extrusion-molding die (20) and adjust the lip spacing (S) at each disposition location comprise: an actuator (311); and a connecting member (312) that connects an output shaft of the actuator and a movable lip (21c). Additionally, the actuator (311) adjusts the lip spacing (S) via the connecting member (312).

## Description

### Technical Field

The present invention relates to a lip gap adjusting device, an extrusion molding die, an extrusion molding apparatus, a method for adjusting lip gap, and a method for manufacturing a film.

### Background Art

There is known an extrusion molding die (T die) that extrudes a film-shaped molten resin from a space (a slit, a gap; hereinafter, referred to as a lip gap) between lips formed at a tip end (see Patent Literature 1, for example).

Patent Literature 1 discloses a plurality of heat bolts that are disposed in a width direction of an extrusion molding die in order to control the thickness of a film-shaped molten resin extruded from a lip gap to be uniform throughout an entire region in a width direction thereof. By manually rotating a lip adjusting screw, the heat bolts move in an axial direction thereof to push or pull one lip (a movable lip, a flexible lip), and locally adjust the lip gap. Thereby, the thickness of the film-shaped molten resin that is extruded from the lip gap thereafter is controlled to be uniform.

### Citation List

### Patent Literature

Patent Literature 1: Japanese Unexamined Patent Application Publication No. 2013-52574

### Summary of Invention

### Technical Problem

There is a room for improvement because it takes a considerable amount of time to manually rotate respective lip adjusting screws of a plurality of heat bolts one by one to adjust the lip gap.

The other problems and new features will become apparent from the description of the present specification and the accompanying drawings.

### Solution to Problem

In a lip gap adjusting device according to one embodiment, a plurality of lip gap adjusting mechanisms disposed in a width direction of an extrusion molding die and configured to adjust a lip gap at respective disposition spots each include an actuator, and a coupling member configured to couple an output shaft of the actuator and a movable lip. The actuator adjusts the lip gap via the coupling member.

### Advantageous Effects of Invention

According to the one embodiment, it is possible to provide the lip gap adjusting device, the extrusion molding die, an extrusion molding apparatus, a method for adjusting a lip gap, and a method for manufacturing a film that can shorten a time period required for adjustment of the lip gap.

### Brief Description of Drawings

Fig. 1 is a schematic view showing an entire configuration of an extrusion molding apparatus 1 according to a first embodiment;
Fig. 2 is a perspective view of a T die 20 to which a lip gap adjusting device 30 is attached;
Fig. 3 is an arrow view seen from an arrow A1 direction in Fig. 2;
Fig. 4 is a cross-sectional view along IV-IV in Fig. 3;
Fig. 5 is a flowchart of an operation example (before start of molding) of the lip gap adjusting device 30;
Fig. 6 is a flowchart of the operation example (after start of molding) of the lip gap adjusting device 30;
Fig. 7 is a graph showing a relationship between a time period and a displacement amount of a movable lip 21c when a lip gap S is adjusted by the lip gap adjusting device 30;
Fig. 8A is a lip gap adjusting device 30A of a comparative example;
Fig. 8B is a graph showing a time period and a displacement amount of the movable lip 21c when the lip gap S is adjusted by the lip gap adjusting device 30A (heat bolt 33) of the comparative example;
Fig. 9 is a cross-sectional view of the T die 20 to which a lip gap adjusting device 30 (modified example 1) is attached;
Fig. 10 is a cross-sectional view of the T die 20 to which a lip gap adjusting device 30 (modified example 2) is attached;
Fig. 11 is a perspective view of the T die 20 to which a lip gap adjusting device 30A (modified example 3) is attached;
Fig. 12 is an arrow view seen from an arrow A2 direction in Fig. 11;
Fig. 13 is a cross-sectional view along XIII-XIII in Fig. 12; and
Fig. 14 is a cross-sectional view of a T die 20 (modified example 4) including a die block 21A including a movable lip 21Ac, and a die block 21B including a movable lip 21Bc.

### Description of Embodiment

Hereinafter, specific embodiment will be described in detail with reference to the drawings. However, the present invention is not limited to the following embodiment. Further, in order to clarify the explanation, the following description and drawings are properly simplified.

### [First Embodiment]

### <Entire Configuration of Extrusion Molding Apparatus>

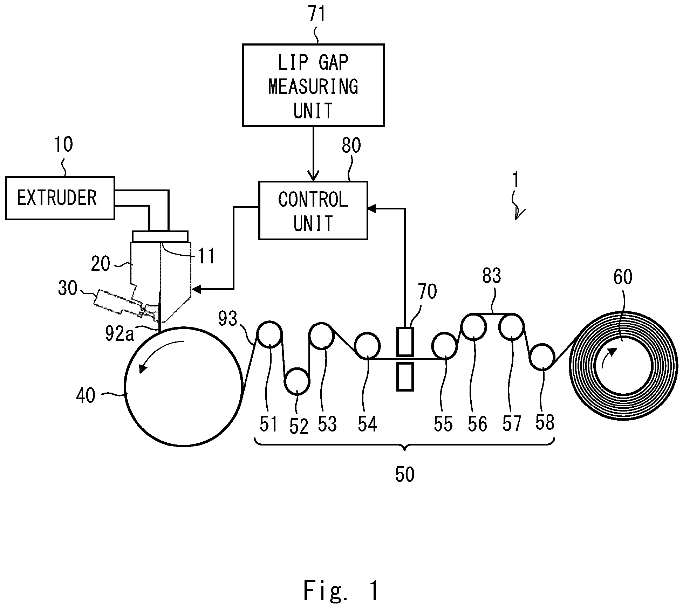

First, an entire configuration of an extrusion molding apparatus 1 according to a first embodiment will be described with reference to Fig. 1. Fig. 1 is a schematic view showing the entire configuration of the extrusion molding apparatus 1 according to the first embodiment.

The extrusion molding apparatus 1 is an apparatus that extrudes a molten resin that is extruded from an extruder 10 (molten resin outlet 11) into a film form from a slit outlet formed at a tip end of a T die 20 (extrusion molding die), that is, a space (a slit, a gap; hereinafter, referred to as a lip gap) between lips. In the present specification, the film includes a sheet.

As shown in Fig. 1, the extrusion molding apparatus 1 includes the extruder 10, the T die 20, a lip gap adjusting device 30, a cooling roll 40, a conveyor roll group 50, a winder 60, a thickness sensor 70, a lip gap measuring unit 71, and a control unit 80. In other words, the extrusion molding apparatus 1 is an unstretched film manufacturing apparatus. Note that the extrusion molding apparatus 1 may be biaxially stretched film manufacturing apparatus in which a longitudinally stretching device that stretches a film in a longitudinal direction (MD (Machine Direction) stretch), and a transversely stretching device that stretches the film in a transverse direction (TD (Transverse Direction) stretch) are disposed in series in this order between the cooling roll 40 and the winder 60, may be a simultaneously biaxially stretched film manufacturing apparatus in which a stretching device that stretches a film in the longitudinal direction and the transverse direction is disposed between the cooling roll 40 and the winder 60, or may be a film manufacturing apparatus of another configuration.

The extruder 10 is a device that extrudes a resin that is heated and melted (hereinafter, referred to as a molten resin) from the molten resin outlet 11. The extruder 10 may be a screw type extruder, or may be a plunger type extruder.

The cooling roll 40 carries out a film 93 resulting from solidification of a film-shaped molten resin 92a while cooling the film-shaped molten resin 92a extruded from the T die 20. The film 93 that is carried out from the cooling roll 40 is conveyed via the conveyor roll group 50, and is wound up by the winder 60. In an example of Fig. 1, the conveyor roll group 50 includes eight conveyor rolls 51 to 58. The number and disposition of the conveyor rolls are properly determined.

The thickness sensor 70 is an online thickness sensor (thickness gauge), and measures thickness of the film formed from the molten resin extruded from the T die 20 in real time at a plurality of positions (at least a plurality of positions corresponding to a plurality of lip gap adjusting mechanisms 31 disposed as described later) along a width direction of the T die 20 (direction orthogonal to a paper surface in Fig. 1). The thickness sensor 70 may be a non-contact type (for example, a laser type, a β-ray type, an X-ray type) thickness sensor, or may be a direct type (for example, a linear gauge type) thickness sensor.

The lip gap measuring unit 71 measures a lip gap at a plurality of positions along the width direction of the T die 20 (a plurality of positions corresponding to the plurality of lip gap adjusting mechanisms 31 that are disposed as described later). A lip gap at each of the plurality of positions may be detected by applying predetermined image processing to an image including the lip gap captured by a camera, or may be detected by a laser type gap sensor. Note that the lip gap at each of the plurality of positions may be manually measured by using a gap gauge. Note that, in the case of manual measurement, it is necessary to input measurement data to the control unit 80 manually.

The control unit 80 controls an actuator so that the thickness of a film becomes uniform based on the thickness (thickness data) of the film measured at the plurality of positions by the thickness sensor 70. The control unit 80 includes a processor though not illustrated. The processor is, for example, a CPU (Central Processing Unit). An operation of the control unit 80 will be described later.

### <Configuration of T Die>

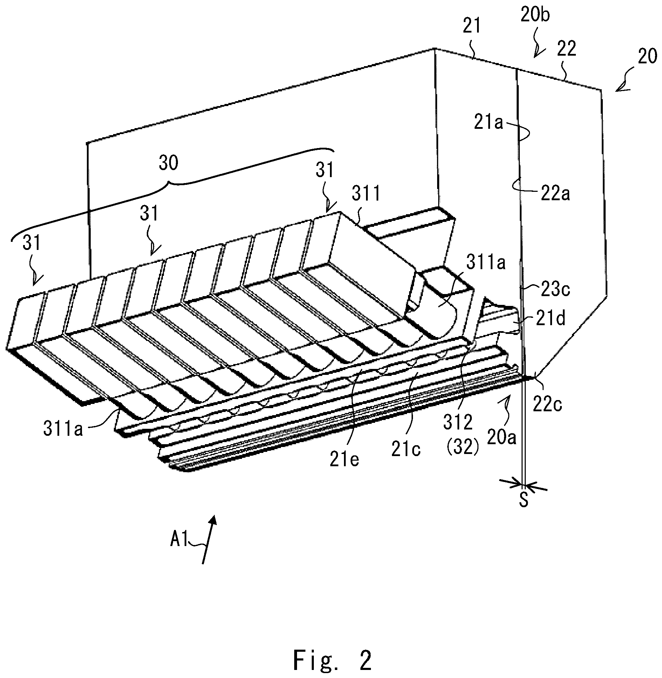

Next, a configuration of the T die 20 will be described with reference to Fig. 2 to Fig. 4.

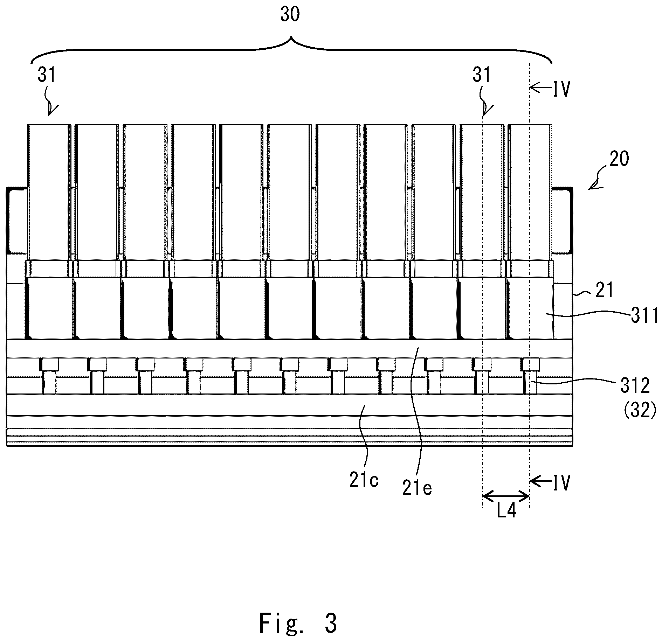

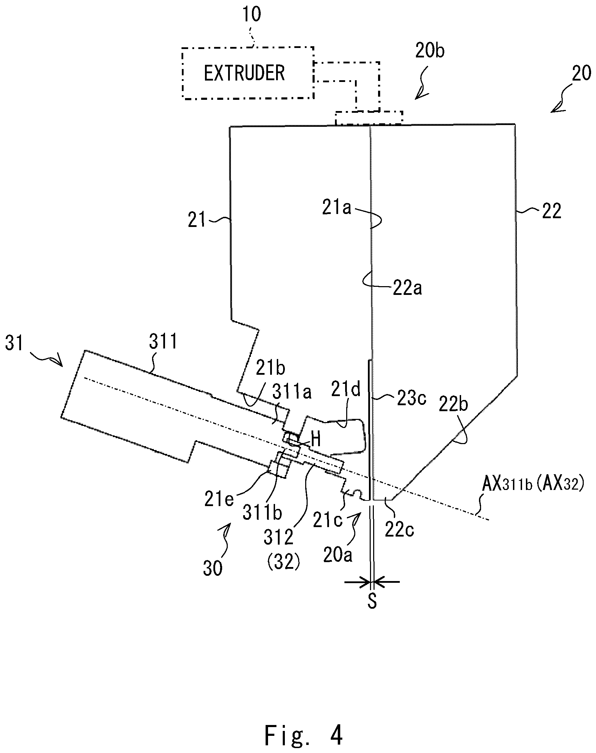

Fig. 2 is a perspective view of the T die 20 to which the lip gap adjusting device 30 is attached, Fig. 3 is an arrow view seen from an arrow A1 direction in Fig. 2, and Fig. 4 is a cross-sectional view along IV-IV in Fig. 3.

The T die 20 is a block-shaped member that molds the molten resin extruded from the extruder 10 into a film form. The T die 20 is typically made of a metal.

As shown in Fig. 4 and the like, a base end portion 20b side of the T die 20 is attached to the extruder 10 in a state in which a tip end portion 20a and a base end portion 20b thereof are disposed in a vertical direction. Note that though not illustrated, the base end portion 20b side of the T die 20 may be attached to the extruder 10 in a state in which the tip end portion 20a and the base end portion 20b thereof are disposed in a horizontal direction.

The T die 20 includes a pair of die blocks 21 and 22. The die block 21 is one example of a first die block of the present invention, and the die block 22 is an example of a second die block of the present invention. The pair of die blocks 21 and 22 respectively include surfaces 21a and 22a that face each other. Though not illustrated, the T die 20 includes an introduction passage, a manifold, and a slit 23c that are formed between the surfaces 21a and 22a facing each other.

The introduction passage is a passage that allows the base end portion 20b of the T die 20 to which the extruder 10 is connected, and the manifold to communicate with each other. The introduction passage extends from the base end portion 20b of the T die 20 toward the tip end portion 20a on an opposite side thereof. A molten resin that is extruded from the extruder 10 is introduced into the introduction passage.

The manifold is a passage extending in the width direction (direction orthogonal to a paper surface in Fig. 4) of the T die 20. The manifold is formed in a middle between the base end portion 20b and the tip end portion 20a of the T die 20. The molten resin passing through the introduction passage is introduced into the manifold. The molten resin passing through the introduction passage passes through the manifold and thereby is pushed and spread in the width direction of the T die 20. The introduction passage and the manifold configure a T shape. The introduction passage corresponds to a vertical bar configuring the T shape, and the manifold corresponds to a horizontal bar configuring the T shape.

The slit 23c is a gap that allows the tip end portion 20a of the T die 20 and the manifold to communicate with each other. The slit 23c extends in the width direction of the T die 20.

A pair of die blocks 21 and 22 respectively include tip end portions including taper surfaces 21b and 22b that are inclined toward tip ends. The die block 21 includes a movable lip 21c (flexible lip). The movable lip 21c can locally displace with a bottom portion of a recessed portion 21d formed at the tip end portion of the die block 21 as a support point by being pushed or pulled by a lip gap adjusting mechanism 31 described later. A tip end (lower end in Fig. 4) of the tip end portion of the die block 21 is the movable lip 21c.

On the other hand, the die block 22 includes a fixed lip 22c. The fixed lip 22c is one example of a mating lip of the present invention. The fixed lip 22c does not displace even when the movable lip 21c is pushed or pulled by the lip gap adjusting mechanism 31 described later. A tip end (lower end in Fig. 4) of the tip end portion of the die block 22 is the fixed lip 22c. The movable lip 21c, the fixed lip 22c, and the recessed portion 21d extend in the width direction of the T die 20.

In the T die 20 of the above-described configuration, the molten resin extruded from the extruder 10 passes through the introduction passage and the manifold that are provided inside of the T die 20, in this order. At this time, the molten resin is pushed and spread in the width direction of the T die 20 by passing through the manifold. The molten resin that is pushed and spread in the width direction of the T die 20 passes through the slit 23c, and is finally extruded into a film form from a slit outlet formed at a tip end of the T die 20, that is, a lip gap S between the movable lip 21c and the fixed lip 22c. A width of the molten resin 92a (see Fig. 1) extruded into a film form corresponds to the width of the T die 20.

### <Configuration of Lip Gap Adjusting Device>

The first embodiment is characterized by including a lip gap adjusting device 30 that will be described below.

As shown in Fig. 2, the lip gap adjusting device 30 includes a plurality of lip gap adjusting mechanisms 31 that are disposed in the width direction of the T die 20 and configured to adjust the lip gap S at respective disposition spots. As shown in Fig. 4 and the like, the lip gap adjusting mechanism 31 includes an actuator 311, and a coupling member 312 that couples an output shaft 311b of the actuator 311 and the movable lip 21c to each other.

The actuator 311 includes an actuator body 311a, and the output shaft 311b that is a rotary shaft. The actuator 311 is, for example, a servomotor (a DC servomotor, an AC servomotor), a stepping motor, a coreless motor, or a DD motor.

The coupling member 312 is a rod member (or an adjusting bolt; hereinafter, referred to as a rod member 32) in which a tip end portion is screwed into the movable lip 21c, and a base end portion is coupled (fixed) to the output shaft 311b of the actuator 311. The rod member 32 is typically made of a metal.

As shown in Fig. 4 and the like, the actuator body 311a is fixed (for example, screw-fixing) to a holding portion 21e provided at the die block 21. The output shaft 311b of the actuator 311 is coupled (fixed) to the base end portion of the rod member 32 the tip end portion of which is screwed into the movable lip 21c in a state in which the output shaft 311b of the actuator 311 is inserted into a through-hole H formed in the holding portion 21e. Note that a center axis AX_{311b} (rotation axis) of the output shaft 311b of the actuator 311 and a center axis AX₃₂ (rotation axis) of the rod member 32 coincide (substantially coincide) with each other.

The control unit 80 is electrically connected to the actuator 311. The control unit 80 controls a rotation direction (a forward direction or a reverse direction) and a rotation amount of the output shaft 311b as described later. The actuator 311 follows control of the control unit 80, and rotates the output shaft 311b (and the rod member 32) to change a screwing amount of the rod member 32 into the movable lip 21c. Thereby, the movable lip 21c displaces (is pushed or pulled) with respect to the fixed lip 22c, and the lip gap S is adjusted.

In order to make the thickness of the film-shaped molten resin extruded from the lip gap S uniform throughout an entire region in the width direction of the T die 20, the plurality of lip gap adjusting mechanisms 31 are attached to the T die 20 (die block 21) in the width direction thereof as shown in Fig. 2 and Fig. 3. The respective lip gap adjusting mechanisms 31 are fixed (for example, screw-fixing) to the holding portion 21e provided at the die block 21. Note that in each of Fig. 2 and Fig. 3, an example in which the number of lip gap adjusting mechanisms 31 is 11 is illustrated, but regardless of this, the number of lip gap adjusting mechanisms 31 can be the number (1 or more) corresponding to the width of the T die 20 (die block 21).

### <Operation Example of Lip Gap Adjusting Mechanism>

Next, an operation example of the lip gap adjusting mechanism 31 of the above-described configuration will be described.

According to the lip gap adjusting mechanism 31 of the above-described configuration, it is possible to locally adjust the lip gap S by controlling the rotation direction (the forward direction or the reverse direction) and the rotation amount of the output shaft 311b (and the rod member 32).

For example, the output shaft 311b (and the rod member 32) is rotated (for example, rotated forward) by the actuator 311 to change (decrease) the screwing amount of the rod member 32 into the movable lip 21c. Thereby, the movable lip 21c locally displaces with the bottom portion of the recessed portion 21d as the support point to move close to the fixed lip 22c. Thereby, the lip gap S is locally narrowed. As a result, the thickness of the film-shaped molten resin (film 93) that is thereafter extruded from the lip gap S locally decreases.

Conversely, the output shaft 311b (and the rod member 32) is rotated (for example, reversely rotated) by the actuator 311 to change (increase) the screwing amount of the rod member 32 into the movable lip 21c. Thereby, the movable lip 21c locally displaces with the bottom portion of the recessed portion 21d as the support point and separates from the fixed lip 22c. Thereby, the lip gap S is locally widened. As a result, the thickness of the film-shaped molten resin (film 93) that is thereafter extruded from the lip gap S locally increases.

### <Operation Example of Lip Gap Adjusting Device (Before Start of Molding)>

Next, an operation example of the lip gap adjusting device 30 of the above-described configuration (before start of molding) will be described. As described below, by adjusting the lip gap at each of the plurality of positions uniformly before start of molding, it is possible to quickly adjust the thickness of the film-shaped molten resin (film 93) that is extruded from the lip gap S uniformly after start of molding.

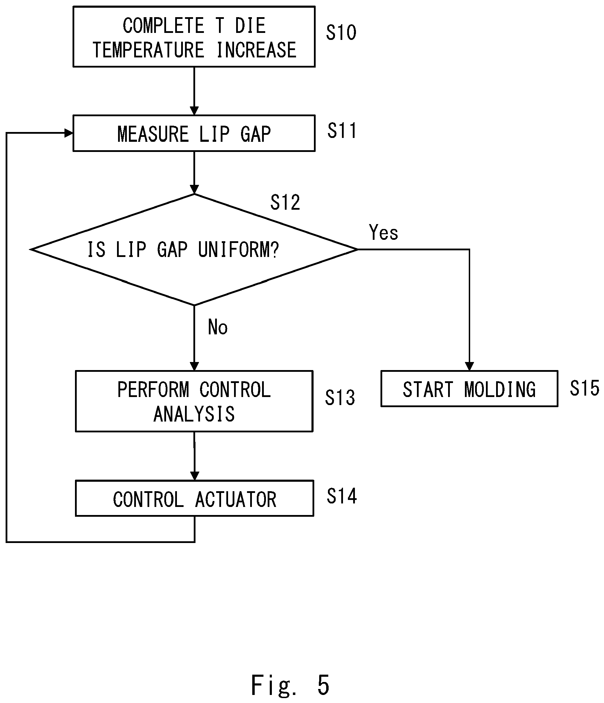

Fig. 5 is a flowchart of the operation example of the lip gap adjusting device 30 (before start of molding).

The following process is realized by the control unit 80 (processor) executing a program that is loaded into a memory (not illustrated) such as a RAM (Random Access Memory) from a storage device (not illustrated) such as a hard disk drive.

When temperature rising of the T die 20 is completed (step S10), the lip gap measuring unit 71 measures the lip gap (lip space) (step S11). Specifically, the lip gap measuring unit 71 measures the lip gap (lip space) at the plurality of positions (plurality of positions corresponding to the plurality of lip gap adjusting mechanisms 31) along the width direction of the T die 20. The measured lip gaps (gap data) are transferred to the control unit 80.

Next, when the lip gaps (plural) measured in step S11 are not uniform (step S12: No), for example, when a lip gap measured in at least one position is outside an allowable range, the control unit 80 performs a control analysis (step S13), and controls the actuator 311 of the lip gap adjusting mechanism 31 corresponding to the position at which the lip gap outside the allowable range is measured (step S14).

Specifically, the control unit 80 locally adjusts the lip gap by controlling the actuator 311 (the rotation direction and the rotation amount of the output shaft 311b) of the lip gap adjusting mechanism 31 corresponding to the position at which the lip gap outside the allowable range is measured so that the lip gaps become uniform (for example, so that the lip gap outside the allowable range is within the allowable range), based on the lip gaps (gap data) measured in step S11.

Next, the lip gap measuring unit 71 measures the lip gaps (lip spaces) again (step S11).

Thereafter, until the lip gaps (plural) measured in step S11 become uniform, the processes in steps S13, S14, and S11 described above are repeatedly executed (step S12: No).

On the other hand, when the lip gaps (plural) measured in step S11 become uniform (step S12: Yes), that is, when all the lip gaps respectively measured at the plurality of positions are within the allowable range, molding is started (step S15).

### <Operation Example of Lip Gap Adjusting Device (After Start of Molding)>

Next, an operation example of the lip gap adjusting device 30 of the above-described configuration (after start of molding) will be described.

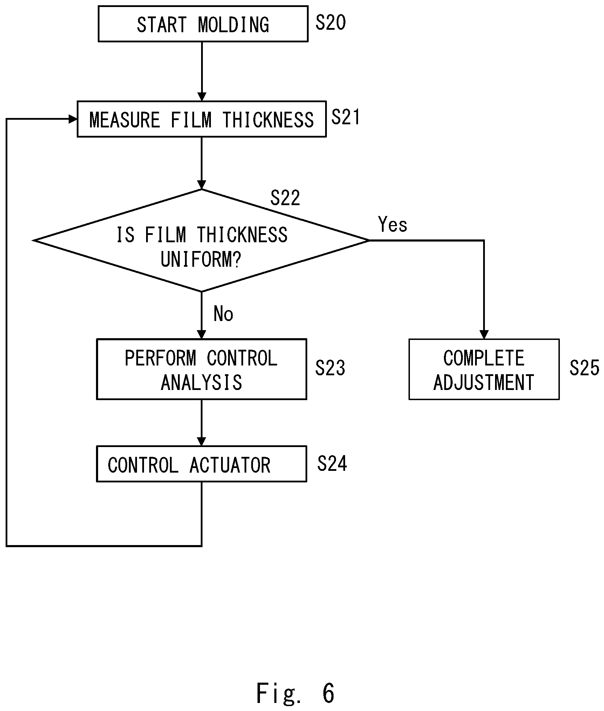

Fig. 6 is a flowchart of the operation example of the lip gap adjusting device 30 (after start of molding).

The following process is realized by the control unit 80 (processor) executing a program loaded into a memory (not illustrated) such as a RAM (Random Access Memory) from a storage device (not illustrated) such as a hard disk drive.

After start of molding (step S20), that is, while the film-shaped molten resin is extruded from the lip gap S, the thickness sensor 70 measures the thickness of the film formed from the molten resin extruded from the T die 20 (lip gap S) (step S21). Specifically, the thickness sensor 70 measures the thickness of the film in real time at a plurality of positions (plurality of positions corresponding to the plurality of lip gap adjusting mechanisms 31) along the width direction of the T die 20. The thickness of the film that is measured (thickness data) is transferred to the control unit 80.

Next, when the thicknesses (plural) of the film measured in step S21 is not uniform (step S22: No), for example, when the thickness of the film measured in at least one position is outside an allowable range, the control unit 80 performs a control analysis (step S23), and controls the actuator 311 of the lip gap adjusting mechanism 31 corresponding to the position at which the thickness of the film outside the allowable range is measured (step S24).

Specifically, the control unit 80 locally adjusts the lip gap by controlling the actuator 311 (the rotation direction and the rotation amount of the output shaft 311b) of the lip gap adjusting mechanism 31 corresponding to the position at which the thickness of the film outside the allowable range is measured so that the thickness of the film becomes uniform (for example, so that the thickness of the film outside the allowable range is within the allowable range), based on the thicknesses of the film measured in step S21 (thickness data).

Next, the thickness sensor 70 measures the thickness of the film formed from the molten resin extruded from the T die 20 (lip gap) again (step S21).

Thereafter, until the thicknesses (plural) of the film measured in step S21 become uniform, the processes of steps S23, S24 and S21 described above are repeatedly executed (step S22: No).

On the other hand, when the thicknesses (plural) of the film measured in step S21 become uniform (step S22: Yes), that is, all the thicknesses of the film measured at the respective plurality of positions are within the allowable range, adjustment is completed (step S25). As above, the film with a uniform thickness can be manufactured.

### <Displacement Amount of Lip>

Next, a relationship between a time period and a displacement amount of the movable lip 21c when the lip gap S is adjusted by the lip gap adjusting device 30 of the above-described configuration will be described.

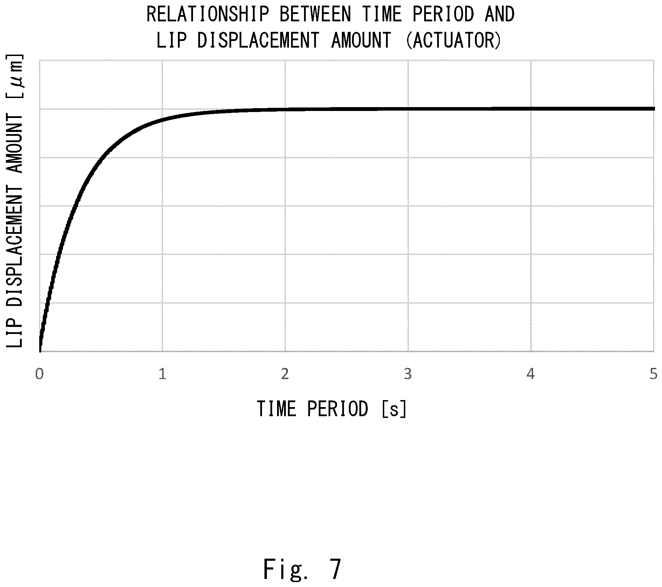

Fig. 7 is a graph showing the relationship between the time period and the displacement amount of the movable lip 21c when the lip gap S is adjusted by the lip gap adjusting device 30.

Referring to Fig. 7, it is found that when the lip gap S is adjusted by the lip gap adjusting device 30, the displacement amount (displacement amount of the movable lip 21c into the fixed lip 22c) of the movable lip 21c is stabilized in less than 2 seconds, that is, the lip gap S can be adjusted in less than 2 seconds.

### <Comparative Example>

Next, a comparative example will be described.

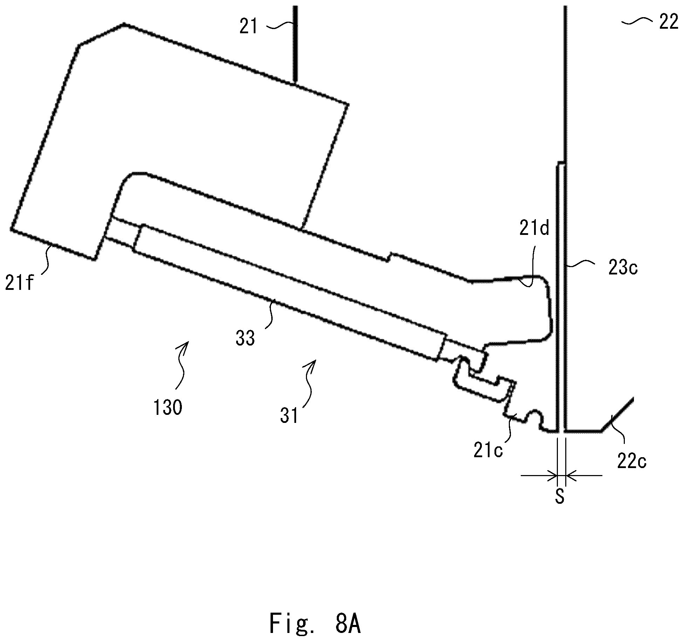

Fig. 8A is a lip gap adjusting device 130 of the comparative example.

As shown in Fig. 8A, in the lip gap adjusting device 130 of the comparative example, a heat bolt 33 in which a tip end portion is coupled (fixed) to a movable lip 21c, and a base end portion is coupled (fixed) to a holding portion 21f provided at a die block 21 is disposed as the lip gap adjusting mechanism 31, in place of the actuator 311 and the rod member 32. The heat bolt 33 thermally expands by increasing a heating temperature of a heater (not illustrated) to increase in a length in an axial direction, and contracts by decreasing the heating temperature of the heater to decrease in the length in the axial direction. In the lip gap adjusting device 130 of the comparative example, the heating temperature of the heater is controlled to extend or contract the heat bolt 33 in the axial direction, and thereby the lip gap is adjusted.

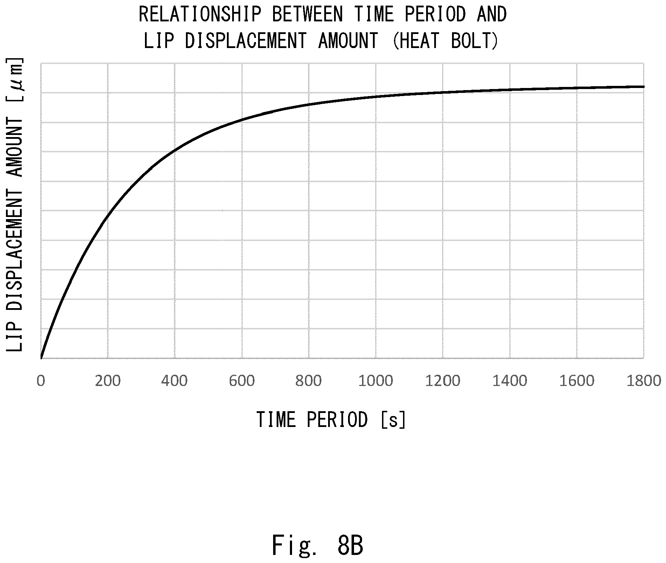

Fig. 8B is a graph showing a relationship between a time period and a displacement amount of the movable lip 21c when the lip gap S is adjusted by the lip gap adjusting device 130 (heat bolt 33) of the comparative example.

Referring to Fig. 8B, it is found that when the lip gap S is adjusted by the lip gap adjusting device 130 (heat bolt 33), it takes about 1600 seconds until the displacement amount of the movable lip 21c (displacement amount of the movable lip 21c with respect to the fixed lip 22c) is stabilized.

As above, it is found that when the lip gap S is adjusted by the lip gap adjusting device 30 (the actuator 311 and the rod member 32), a time period required to displace to a target value is overwhelmingly short (the lip gap S can be adjusted extremely quickly), as compared with the case of adjusting the lip gap S by the lip gap adjusting device 130 (heat bolt 33).

As described above, according to the first embodiment, it is possible to shorten the time period required for adjustment of the lip gap.

This is because the actuator 311 and the rod member 32 are used instead of the heat bolt, as the lip gap adjusting mechanism 31, and the actuator 311 rotates the rod member 32 to change the screwing amount of the rod member 32 into the movable lip 21c, and thereby adjusts the lip gap S.

Further, according to the first embodiment, by attaching the actuators 311 to the coupling members 312 (rod members or adjusting bolts) one by one, all the coupling members 312 (the rod members or the adjusting bolts) can be simultaneously pushed and pulled at a rough adjustment stage (before start of molding), whereas at a fine adjustment stage (after start of molding), the time period required to reach the target displacement amount is overwhelmingly shorter than the heat bolt, so that it is possible to shorten the time period required for thickness control of the film.

Further, according to the first embodiment, there is also an advantage that there is no risk of damage to the coupling member 312 (the rod member or the adjusting bolt) due to excessive tightening because the lip gap is adjusted by only the actuator 311, although when adjustment (rough adjustment) of the lip gap by bolt tightening is manually performed, there is a risk that the heat bolt may be damaged by being bent or the like by excessive tightening.

Further, according to the first embodiment, there is no need for manual adjustment by performing control with the actuator 311, and therefore, there is also an advantage that there is no need to approach the T die 20 which is a hot object, and a roll (cooling roll 40 or the like) which is a rotating body and perform operations during molding (increase in safety).

Next, modified examples will be described.

### (Modified Example 1)

In the first embodiment described above, the example using the rod member 32 as the coupling member 312 that couples the output shaft 311b of the actuator 311 and the movable lip 21c to each other is described, but the present invention is not limited to this.

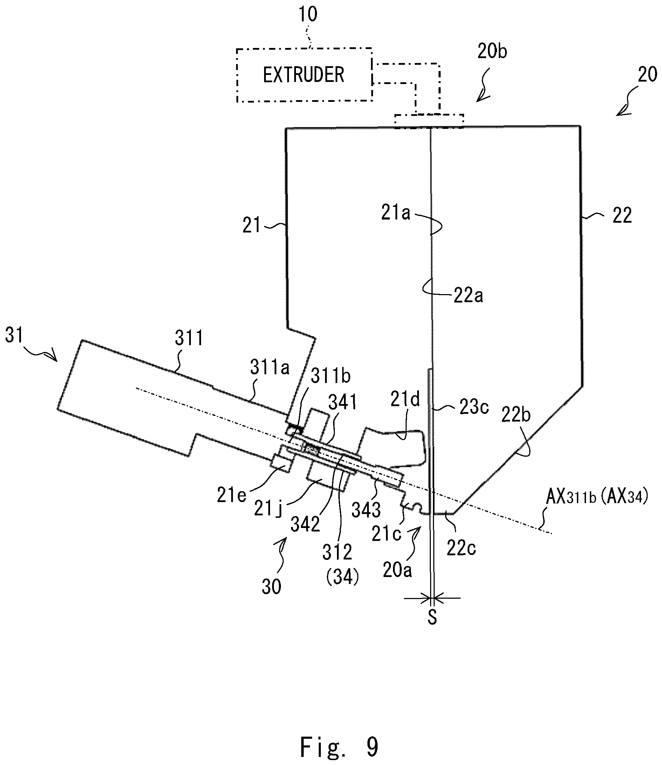

For example, as shown in Fig. 9, as a coupling member 312 that couples an output shaft 311b of an actuator 311 and a movable lip 21c, a differential screw (hereinafter, referred to as a differential screw 34) in which a tip end portion is coupled (fixed) to the movable lip 21c, and a base end portion is coupled (fixed) to the output shaft 311b of the actuator 311 may be used. Fig. 9 is a cross-sectional view of a T die 20 to which a lip gap adjusting device 30 (modified example 1) is attached.

The differential screw 34 is a differential screw in which a pitch of an external screw 341 and a pitch of an internal screw 342 are different (the pitch of the external screw 341 > the pitch of the internal screw 342).

The external screw 341 of the differential screw 34 is screwed into a holding portion 21j provided at a die block 21. A rod 343 is screwed onto the internal screw 342 of the differential screw 34. The tip end portion of the differential screw 34 (rod 343) is coupled (fixed) to the movable lip 21c. Note that a center axis AX_{311b} (rotation axis) of the output shaft 311b of the actuator 311 and a center axis AX₃₄ (rotation axis) of the differential screw 34 coincide (substantially coincide) with each other.

According to modified example 1, it is possible to exhibit similar effects to those of the first embodiment, such as being able to shorten the time period required for adjustment of the lip gap.

This is because the actuator 311 and the differential screw 34 are used as the lip gap adjusting mechanism 31 instead of the heat bolt, and the actuator 311 rotates the differential screw 34, and thereby adjusts the lip gap S.

### (Modified Example 2)

In the first embodiment described above, the example using the actuator 311 including the actuator body 311a, and the output shaft 311b that is a rotary shaft is described, but the present invention is not limited to this.

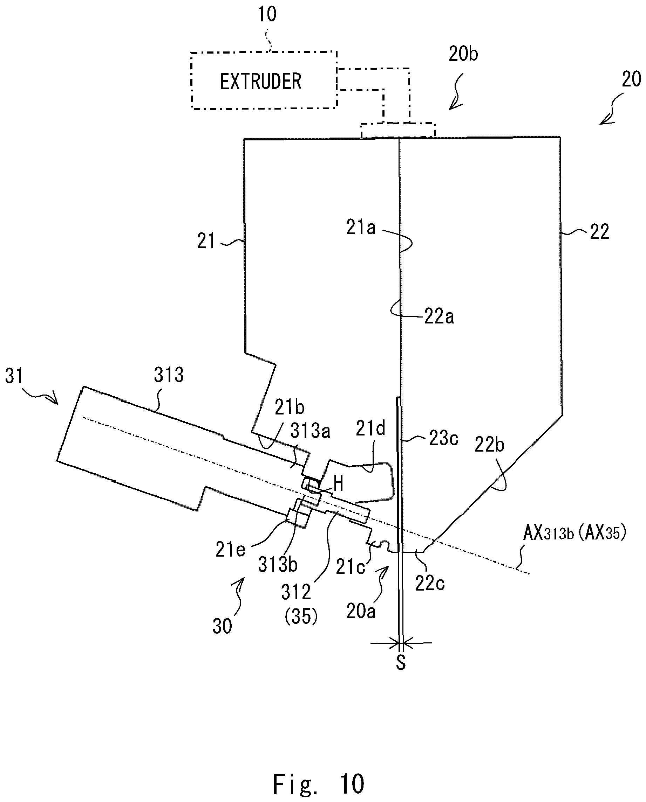

For example, as shown in Fig. 10, instead of the actuator 311, an actuator 313 (linear actuator) including an actuator body 313a, and an output shaft 313b that is extruded or retracted with respect to the actuator body 313a may be used. Fig. 10 is a cross-sectional view of a T die 20 to which a lip gap adjusting device 30 (modified example 2) is attached. In this case, as a coupling member 312 that couples the output shaft 313b of the actuator 313 and a movable lip 21c, a rod member 35 in which one end portion is coupled to the movable lip 21c, and the other end portion is coupled to the output shaft 313b of the actuator 313 is used. Note that a center axis AX_{313b} (rotation axis) of the output shaft 313b of the actuator 313 and a center axis AX₃₅ (rotation axis) of the rod member 35 coincide (substantially coincide) with each other.

According to modified example 2, it is also possible to exhibit similar effects to those of the first embodiment, such as being able to shorten the time period required for adjustment of the lip gap.

This is because the actuator 313 and the rod member 35 are used as the lip gap adjusting mechanism 31 instead of the heat bolt, and the actuator 313 extrudes or retracts the output shaft 313b, and thereby adjusts the lip gap S.

### (Modified Example 3)

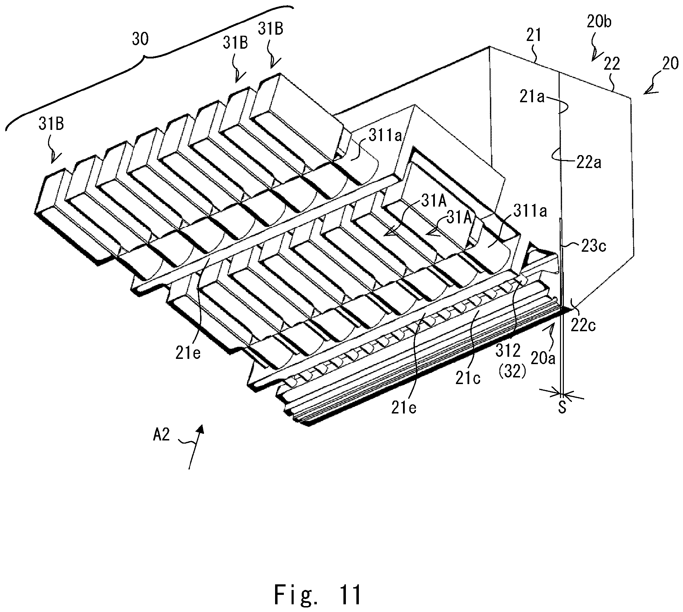

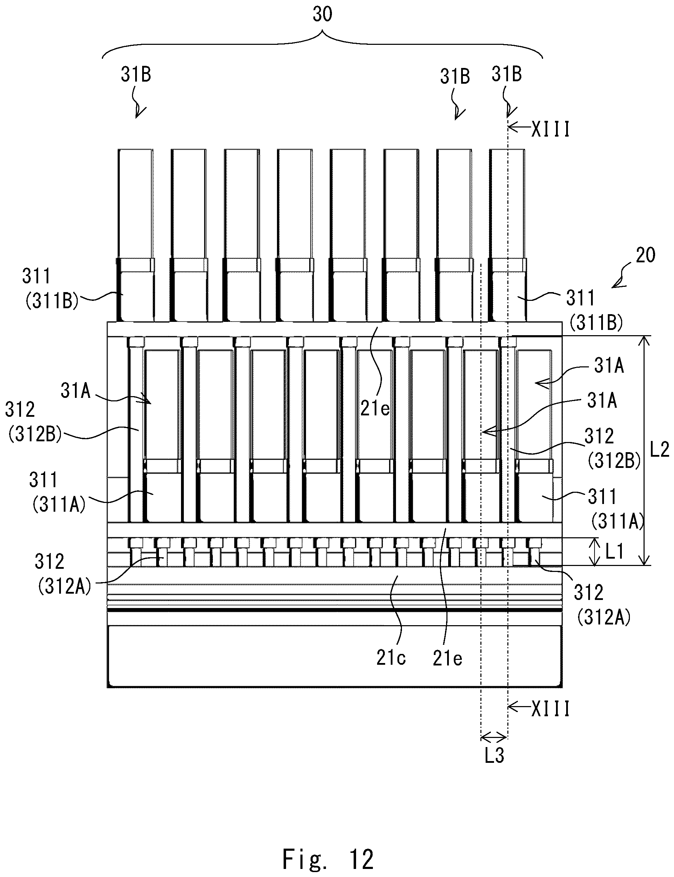

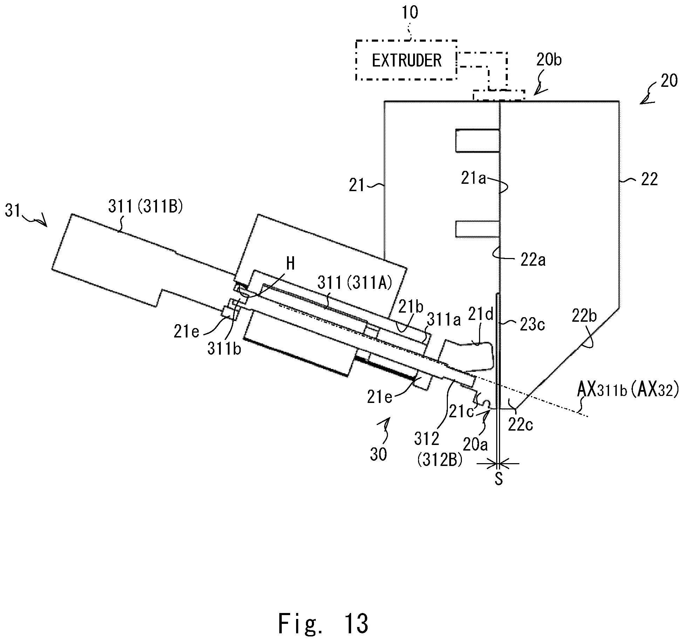

Fig. 11 is a perspective view of a T die 20 to which a lip gap adjusting device 30 (modified example 3) is attached, Fig. 12 is an arrow view seen from an arrow A2 direction in Fig. 11, and Fig. 13 is a cross-sectional view along XIII to XIII in Fig. 12.

As shown in Fig 11 to Fig. 13, a lip gap adjusting device 30A (modified example 3) includes first lip gap adjusting mechanisms 31A and second lip gap adjusting mechanisms 31B. The first lip gap adjusting mechanisms 31A and the second lip gap adjusting mechanisms 31B are alternately disposed in a width direction of the T die 20.

The first lip gap adjusting mechanism 31A includes an actuator 311 (hereinafter, referred to as a first actuator 311A), and a coupling member 312 (hereinafter, referred to as a first coupling member 312A) that couples an output shaft 311b of the first actuator 311A and a movable lip 21c.

The second lip gap adjusting mechanism 31B includes an actuator 311 (hereinafter, referred to as a second actuator 311B), and a coupling member 312 (hereinafter, referred to as a second coupling member 312B) that couples an output shaft 311b of the second actuator 311B and the movable lip 21c.

The first actuator 311A is disposed close to the movable lip 21c. A length in an axial direction of the first coupling member 312A that couples the output shaft 311b of the first actuator 311A and the movable lip 21c is L1.

On the other hand, the second actuator 311B is disposed far from the movable lip 21c so as not to interfere with the first actuator 311A. A length in an axial direction of the second coupling member 312B that couples the output shaft 311b of the second actuator 311B and the movable lip 21c is L2 that is longer than L2.

According to modified example 3, it is also possible to exhibit similar effects to those of the first embodiment, such as being able to shorten the time period required for adjustment of the lip gap.

Further, according to modified example 3, as compared with the first embodiment described above, a disposition interval L3 of the coupling members 312 can be narrowed (the disposition interval L3 shown in Fig. 12 < a disposition interval L4 shown in Fig. 3).

### (Modified Example 4)

In the first embodiment described above, the example of using the T die 20 including the die block 21 including the movable lip 21c and the die block 22 including the fixed lip 22c as the extrusion molding die is described, but the present invention is not limited to this.

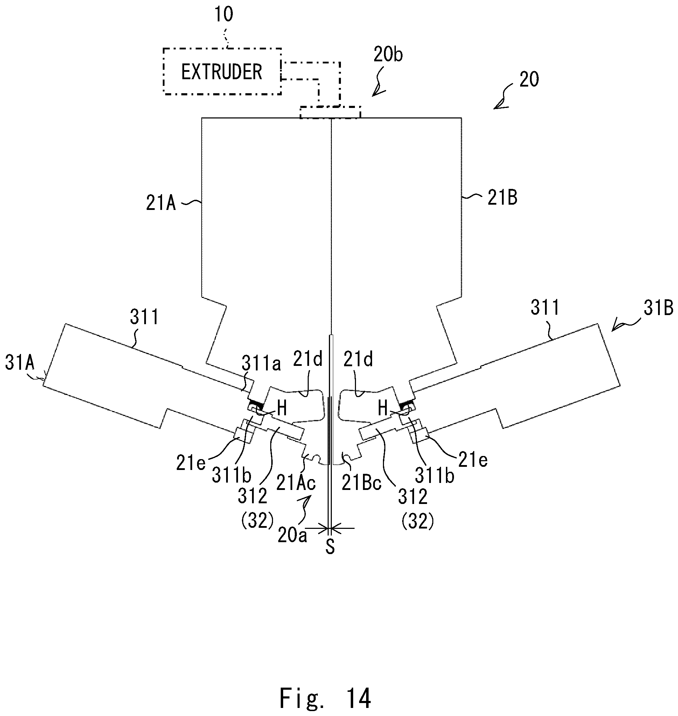

For example, as shown in Fig. 14, a T die 20 including a die block 21A including a movable lip 21Ac, and a die block 21B including a movable lip 21Bc may be used. The movable lip 21Bc is one example of a mating lip of the present invention. Fig. 14 is a cross-sectional view of the T die 20 (modified example 4) including the first die block 21A including the movable lip 21Ac, and the second die block 21B including the movable lip 21Bc.

The first die block 21A includes a plurality of third lip gap adjusting mechanisms 31A that are disposed in a width direction (direction orthogonal to a paper surface in Fig. 14) of the first die block 21A, and adjust a lip gap S at respective disposition spots. Likewise, the second die block 21B includes a plurality of fourth lip gap adjusting mechanisms 31B that are disposed in a width direction (direction orthogonal to the paper surface in Fig. 14) of the second die block 21B, and configured to adjust the lip gap S at respective disposition spots.

According to modified example 4, it is also possible to exhibit similar effects to those of the first embodiment.

Note that in each of the T die 20 of modified example 1 (see Fig. 9), the T die 20 of modified example 2 (see Fig. 10), and the T die 20 of modified example 3 (see Fig. 11 to Fig. 13), the T die 20 including the first die block 21A including the movable lip 21Ac, and the second die block 21B including the movable lip 21Bc may be used similarly to present modified example 4.

The invention made by the present inventor is specifically described based on the embodiment thus far, but it goes without saying that the present invention is not limited to the embodiment already described, and various changes can be made within the range without departing from the gist of the invention.

### Reference Signs List

- 1: EXTRUSION MOLDING APPARATUS
- 10: EXTRUDER
- 11: MOLTEN RESIN OUTLET
- 20: T DIE (EXTRUSION MOLDING DIE)
- 20a: TIP END PORTION
- 20b: BASE END PORTION
- 21: DIE BLOCK
- 21b: TAPER SURFACE
- 21c: MOVABLE LIP
- 21d: RECESSED PORTION
- 21e: HOLDING PORTION
- 21f: HOLDING PORTION
- 21j: HOLDING PORTION
- 22: DIE BLOCK
- 22b: TAPER SURFACE
- 22c: FIXED LIP
- 23c: SLIT
- 30: LIP GAP ADJUSTING DEVICE
- 31: LIP GAP ADJUSTING MECHANISM
- 31A: FIRST LIP GAP ADJUSTING MECHANISM
- 31B: SECOND LIP GAP ADJUSTING MECHANISM
- 32: ROD MEMBER
- 33: HEAT BOLT
- 34: DIFFERENTIAL SCREW
- 35: ROD MEMBER
- 40: COOLING ROLL
- 50: CONVEYOR ROLL GROUP
- 51-58: CONVEYOR ROLL
- 60: WINDER
- 70: THICKNESS SENSOR
- 71: LIP GAP MEASURING UNIT
- 80: CONTROL UNIT
- 92a: MOLTEN RESIN
- 93: FILM
- 311: ACTUATOR
- 311A: FIRST ACTUATOR
- 311B: SECOND ACTUATOR
- 311a: ACTUATOR BODY
- 311b: OUTPUT SHAFT
- 312: COUPLING MEMBER
- 312A: FIRST COUPLING MEMBER
- 312B: SECOND COUPLING MEMBER
- 313: ACTUATOR
- 313a: ACTUATOR BODY
- 313b: OUTPUT SHAFT
- 341: EXTERNAL SCREW
- 342: INTERNAL SCREW
- 343: ROD
- S: LIP GAP

## Claims

1. A lip gap adjusting device configured to adjust a lip gap between a movable lip and a mating lip of an extrusion molding die, the lip gap adjusting device comprising;
a plurality of lip gap adjusting mechanisms disposed in a width direction of the extrusion molding die and configured to adjust the lip gap at respective disposition spots,
wherein the lip gap adjusting mechanisms each comprise an actuator, and a coupling member coupling an output shaft of the actuator and the movable lip.

2. The lip gap adjusting device according to claim 1, wherein
the actuator includes the output shaft that is a rotary shaft,
the coupling member is a rod member in which a tip end portion is screwed into the movable lip, and a base end portion is coupled to the output shaft of the actuator, and
the actuator rotates the rod member to change a screwing amount of the rod member into the movable lip, and thereby adjusts the lip gap.

3. The lip gap adjusting device according to claim 1, wherein
the actuator includes the output shaft that is a rotary shaft,
the coupling member is a differential screw in which a tip end portion is coupled to the movable lip, and a base end portion is coupled to the output shaft of the actuator, and
the actuator rotates the differential screw, and thereby adjusts the lip gap.

4. The lip gap adjusting device according to claim 1, wherein
the actuator includes the output shaft that is extruded or retracted with respect to an actuator body,
the coupling member is a rod member in which one end portion is coupled to the movable lip, and another end portion is coupled to the output shaft of the actuator, and
the actuator extrudes or retracts the output shaft, and thereby adjusts the lip gap.

5. The lip gap adjusting device according to any one of claims 1 to 4, wherein the actuator includes a servomotor.

6. The lip gap adjusting device according to claim 1, wherein
the lip gap adjusting mechanisms include a first lip gap adjusting mechanism, and a second lip gap adjusting mechanism,
the first lip gap adjusting mechanism, and the second lip gap adjusting mechanism are alternately disposed in a width direction of the extrusion molding die,
the first lip gap adjusting mechanism comprises a first actuator, and a first coupling member coupling an output shaft of the first actuator and the movable lip to each other,
the second lip gap adjusting mechanism comprises a second actuator, and a second coupling member coupling an output shaft of the second actuator and the movable lip to each other,
the first actuator is disposed close to the movable lip, and
the second actuator is disposed far from the movable lip not to interfere with the first actuator.

7. The lip gap adjusting device according to any one of claims 1 to 6, wherein the mating lip is a fixed lip.

8. The lip gap adjusting device according to any one of claims 1 to 6, wherein the mating lip is a movable lip different from the movable lip.

9. An extrusion molding die, comprising:
the lip gap adjusting device according to any one of claims 1 to 8;
the movable lip; and
the mating lip.

10. An extrusion molding die, comprising:
the lip gap adjusting device according to claim 8;
a first die block including the movable lip; and
a second die block including the mating lip, wherein
the lip gap adjusting mechanisms include third lip gap adjusting mechanisms, and fourth lip gap adjusting mechanisms,
the third lip gap adjusting mechanisms are a plurality of lip gap adjusting mechanisms disposed in a width direction of the first die block, and configured to adjust the lip gap at respective disposition spots,
the fourth lip gap adjusting mechanisms are a plurality of lip gap adjusting mechanisms disposed in a width direction of the second die block, and configured to adjust the lip gap at respective disposition spots,
the third lip gap adjusting mechanisms each comprise a first actuator, and a first coupling member coupling an output shaft of the first actuator and the movable lip to each other, and
the fourth lip gap adjusting mechanisms each comprise a second actuator, and a second coupling member coupling an output shaft of the second actuator and the mating lip to each other.

11. An extrusion molding apparatus comprising the extrusion molding die according to claim 9 or 10.

12. The extrusion molding apparatus according to claim 11, further comprising a control unit configured to control the actuator so that the lip gap becomes uniform, based on the lip gap measured in each of a plurality of positions along the width direction of the extrusion molding die.

13. The extrusion molding apparatus according to claim 12, further comprising a lip gap measuring unit configured to measure the lip gap in each of the plurality of positions along the width direction of the extrusion molding die,
wherein the control unit controls the actuator so that the lip gap becomes uniform, based on the lip gap measured by the lip gap measuring unit.

14. The extrusion molding apparatus according to claim 11, further comprising:
a thickness sensor configured to measure thickness of a film formed from a molten resin extruded from the lip gap in each of a plurality of positions along the width direction of the extrusion molding die; and
a control unit configured to control the actuator so that the thickness of the film becomes uniform, based on the thickness of the film measured in each of the plurality of positions.

15. A method for adjusting a lip gap, comprising:
a lip gap measuring step of measuring a lip gap between a movable lip and a mating lip of an extrusion molding die in each of a plurality of positions along a width direction of the extrusion molding die; and
a controlling step of controlling actuators of a plurality of lip gap adjusting mechanisms that are disposed in a width direction of the extrusion molding die and configured to adjust the lip gap at respective disposition spots, so that the lip gap becomes uniform, based on the lip gap measured in each of the plurality of positions.

16. A method for adjusting a lip gap, comprising:
a thickness measuring step of measuring thickness of a film formed from a molten resin extruded from a lip gap between a movable lip and a mating lip of an extrusion molding die in a plurality of positions along a width direction of the extrusion molding die; and
a controlling step of controlling actuators of a plurality of lip gap adjusting mechanisms that are disposed in the width direction of the extrusion molding die and configured to adjust the lip gap at respective disposition spots so that the thickness of the film becomes uniform, based on the thickness of the film measured in each of the plurality of positions.

17. A method for manufacturing a film, comprising:
a step of extruding a film formed from a molten resin from a lip gap between a movable lip and a mating lip of an extrusion molding die;
a thickness measuring step of measuring thickness of the film extruded from the lip gap in a plurality of positions along a width direction of the extrusion molding die; and
a controlling step of controlling actuators of a plurality of lip gap adjusting mechanisms that are disposed in the width direction of the extrusion molding die and configured to adjust the lip gap at respective disposition spots so that the thickness of the film becomes uniform, based on the thickness of the film measured in each of the plurality of positions.
